# EUROPEAN PATENT SPECIFICATION

(11) **EP 3 346 266 B1**
(45) Date of publication and mention of the grant of the patent: **19.07.2023**
(21) Application number: 16839261.1
(22) Date of filing: 23.08.2016
(51) Int. Cl.: B01D 15/22, G01N 30/60, B01J 20/26, B01J 20/285

(54) **LIQUID CHROMATOGRAPHY COLUMN AND LIQUID CHROMATOGRAPHY DEVICE EQUIPPED WITH SAME**
SÄULE FÜR FLÜSSIGCHROMATOGRAFIE UND FLÜSSIGKEITSCHROMATOGRAFIEVORRICHTUNG DAMIT
COLONNE DE CHROMATOGRAPHIE EN PHASE LIQUIDE ET DISPOSITIF DE CHROMATOGRAPHIE EN PHASE LIQUIDE ÉQUIPÉ DE CELLE-CI

(30) Priority: 25.08.2015 JP 2015165552
(43) Date of publication of application: 11.07.2018
(73) Proprietor: Resonac Corporation, Tokyo (JP)
(72) Inventor: KATO, Junya, Tokyo 105-8518 (JP); KONDO, Hideyuki, Tokyo 105-8518 (JP); MARUOKA, Naoko, Tokyo 105-8518 (JP); RIESS Anne, 9100 Herisau (CH)
(74) Representative: Strehl Schübel-Hopf & Partner
(86) International application number: PCT/JP2016/074468
(87) International publication number: WO 2017/033914

(56) References cited:
- EP-A1- 1 306 668
- JP-A- H04 258 761
- JP-A- S59 222 763
- JP-A- S59 222 763
- JP-A- 2002 214 214
- US-A1- 2007 175 809
- US-A1- 2013 001 145
- US-B1- 6 224 760

## Description

### TECHNICAL FIELD

The present invention relates to a liquid chromatographic column, the use of the same, and a liquid chromatographic apparatus including the same.

### BACKGROUND ART

Liquid chromatography is widely used as means for separating out and purifying a target material from natural products, fermentation products, cultured products, or synthetic products. In particular, ion chromatography is used as means having high efficiency, accuracy, and sensitivity for analyzing anions or cations in water, the anions including a phosphate ion, a fluoride ion, a chloride ion, a nitrite ion, a bromide ion, a nitrate ion, and a sulfate ion, and the cations including a lithium ion, a sodium ion, a potassium ion, a calcium ion, a magnesium ion, and an ammonium ion.

In a column used for ion chromatography, frequently, a resin material is preferably used to suppress the elution of metal ions from a material constituting the column. However, there is a problem in that the resin material is more likely to be deformed compared with the case of using a metal during pressure application. In particular, in a use mode where it is necessary to continuously monitor water quality, an ion chromatographic analyzer continuously operates without being stopped, and a load is continuously applied to the column.

As a typical malfunction caused by continuous use, for example, a filter of a column may become clogged with an injected sample component or impurities injected with the sample component, and pressure applied to the system may exceed the limit of an apparatus, which leads to analysis failure.

As a method for reducing an increase in the system pressure caused by clogging of the filter or the like, various techniques of the related art are disclosed. For example, Patent Document 1 discloses a technique that provides filters having different pore sizes to overlap each other. In addition, Patent Document 2 discloses a technique that changes a pore size in stages.

On the other hand, one of the important performances of liquid chromatography is separation performance. The separation performance can be expressed by the number of theoretical plates. The greater the number of theoretical plates, the higher the separation performance. When an apparatus is continuously used over a long period of time, there may be a problem in that the number of theoretical plates decreases. The reason for this is presumed to be that a column structural material is gradually deformed during pressure application such that a space called a dead volume is formed in a column. Patent Document 3 discloses a technique that forms a thin-film-shaped sealing member having an elastic modulus higher than those of a cylindrical column body and frits between plural filters or between the filters and the column body in order to suppress an increase in pressure and to reduce the formation of the dead volume. In addition, Patent Document 4 discloses an apparatus which includes a mechanism for moving filters as means for compensating for the dead volume which is formed by a filler sinking in a preparative column due to its own weight.
EP 1 306 668 A1 discloses a chromatography column having a filter plate and a distributor plate at the inlet of the column, next to a packing layer. The distributor plate and the filter plate can be made of polypropylene or other similar plastics, and the distributor plate can also be made of ceramics.

### CITATION LIST

### PATENT DOCUMENT

[Patent Document 1] Japanese Unexamined Patent Application, First Publication No. S59-222763
[Patent Document 2] Japanese Unexamined Patent Application, First Publication No. H2-262054
[Patent Document 3] Japanese Patent No. 4651505
[Patent Document 4] Japanese Patent No. 5271284

### SUMMARY OF INVENTION

### TECHNICAL PROBLEM

In the methods disclosed in Patent Documents 1 and 2, an increase in pressure can be reduced; however, when a resin material which is likely to be deformed is used, the formation of a dead volume cannot be avoided. In addition, the means disclosed in Patent Document 3 is complicated in that, for example, the use of a special sealing material is required, which is not economical. The means disclosed in Patent Document 4 is a special mechanism in a preparative column and is not easily realized in an analytical column. In particular, when only the resin material is used, a method capable of efficiently suppressing an increase in pressure and maintaining separation performance at the same time has yet to be developed and is still desired.

The present invention has been made in consideration of the above-described circumstances, and an object thereof is to provide a liquid chromatographic column which includes filters made of only a resin material and in which deterioration of the number of theoretical plates is suppressed and stable separation performance is exhibited even when continuously used over a long period of time; and a liquid chromatographic apparatus including the liquid chromatographic column.

### SOLUTION TO PROBLEM

The present invention solves the above-described problems.

The present invention is defined in the appended claims.

### ADVANTAGEOUS EFFECTS OF INVENTION

According to the present invention, it is possible to provide a liquid chromatographic column which includes filters made of only a resin material and in which deterioration of the number of theoretical plates is suppressed and stable separation performance is exhibited even when continuously used over a long period of time; and a liquid chromatographic apparatus including the liquid chromatographic column.

### BRIEF DESCRIPTION OF DRAWINGS

FIG. 1 is a cross-sectional view schematically showing an example of an eluent inflow end side of a liquid chromatographic column according to the present invention.
FIG. 2 is a cross-sectional view schematically showing an example of an eluent outflow end side of a liquid chromatographic column according to the present invention.
FIG. 3 is a cross-sectional view schematically showing another example of the eluent outflow end side of the liquid chromatographic column according to the present invention.
FIG. 4 is a graph showing the transitions of column pressure and elution time which are changed by repeated injection.
FIG. 5 is a graph showing the transitions of the number of theoretical plates and the peak symmetry coefficient of NO₃⁻ which are changed by repeated injection.

### DESCRIPTION OF EMBODIMENTS

Hereinafter, configurations of a liquid chromatographic column and a liquid chromatographic apparatus including the liquid chromatographic column to which the present invention is applied will be described with reference to the drawings.

In the drawings used for the following description, some characteristic portions are shown in an enlarged manner for convenience of easy understanding of characteristics, and dimension ratios between respective components are not necessarily the same as the actual dimension ratios between the components. In addition, materials, dimensions, and the like in the following description are merely exemplary

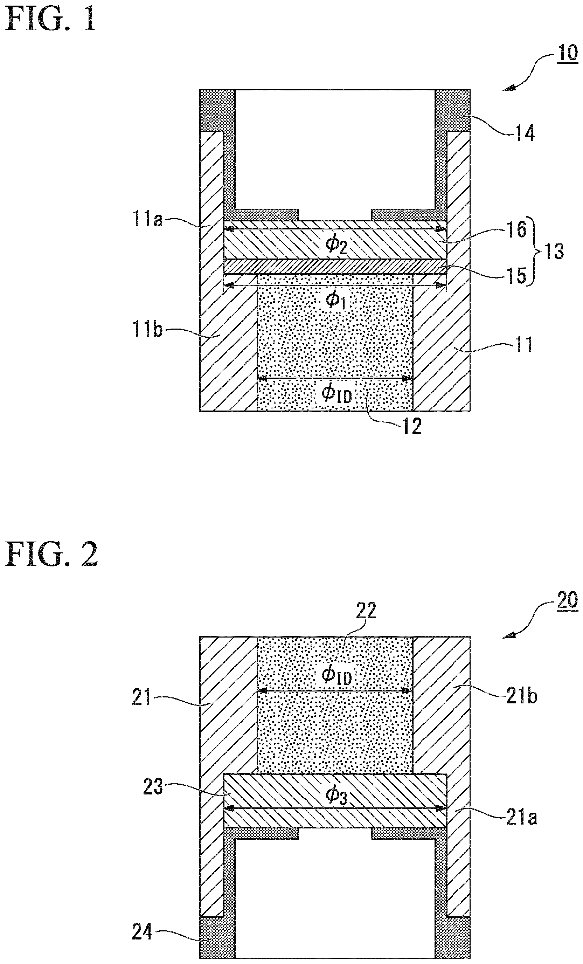

FIG. 1 shows an example of an eluent inflow end side of a liquid chromatographic column according to an embodiment to which the present invention is applied.

A liquid chromatographic column (inflow side) 10 shown in FIG. 1 includes a column body 11, a filler 12, an inflow-side filter 13, and an inner lid member 14.

### (Column Body)

The column body 11 is a cylindrical member and, generally, is made of metal such as SUS or a resin having high stiffness such as PEEK. These materials are preferable from the viewpoint that they are less likely to be deformed during pressure application. During analysis such as ion chromatography in which a metal ion component may be eluted or analysis of a polar component which may be adsorbed on the column body, a resin material such as PEEK is preferably used in many cases. Since a filter material used in the present invention is made of a resin, it is particularly preferable that the filter material be used in combination with a column body made of a resin.

The inner diameter of the column body is not particularly limited but is typically within a range of 1.0 mm to 5.0 mm. In addition, the length of the column body is typically within a range of 10 mm to 300 mm although it depends on separation performance.

### (Inflow-Side Filter)

The inflow-side filter 13 is disposed at an eluent inflow-side end 11a of the column body 11 and has a two-layer structure consisting of a first resin filter member 15 and a second resin filter member 16 which are disposed in this order from a side of the inflow-side filter 13 contacting the filler 12. The first resin filter member 15 and the second resin filter member 16 are not necessarily attached to each other through an adhesive material or the like as long as they simply overlap each other to be in contact with each other. However, the first resin filter member 15 and the second resin filter member 16 may be attached to each other through an adhesive material or the like.

The first resin filter member 15 and the second resin filter member 16 are porous members, and the first resin filter member 15 has an indentation elastic modulus lower than that of the second resin filter member 16.

The inflow-side filter according to the present invention has a two-layer structure in which a first resin filter member and a second resin filter member overlap each other, the first resin filter member being a porous member having elasticity, and the second resin filter member being a porous member having stiffness. Here, "having elasticity" in "the first resin filter member being a porous member having elasticity" indicates having elasticity compared with the second resin filter member, and "having stiffness" in "the second resin filter member being a porous member having stiffness" indicates having stiffness compared with the first resin filter member. The history of obtaining the technical idea of the inflow-side filter will be described below.

The present inventors faced a problem: when only a porous material having stiffness, that is, a porous material that is difficult to deform and restore due to its hardness is used as a filter, in a test (repeated injection test) in which a sample is repeatedly injected, an effect of suppressing an increase in pressure can be obtained, but the number of theoretical plates gradually decreases. This implies that a dead volume is unavoidably formed in a column. In particular, it is presumed that the filter material having stiffness is deformed to the extent that the dead volume is formed, although it may not cause an increase in pressure.

On the other hand, the present inventors found a phenomenon in which, even when the pressure increases in the repeated injection test, the increase in pressure is gradually alleviated by removing the column from an apparatus during the test and leaving the column to stand for a while. This implies that the filter material whose pore size has been reduced by being compressed by pressure returns to the original state due to an elastic effect even though a long period of time is required.

Based on such phenomenon, the present inventors arrived at a deduction that the active development of the above elastic deformation phenomenon can suppress not only an increase in pressure but also a decrease in the number of theoretical plates. Specifically, the present inventors thought that a structure in which deformation is rapidly restored and the number of theoretical plates does not substantially decrease can be obtained by using a porous material having elasticity, that is, a porous material that is easy to deform and restore. When only a porous material having elasticity is used, deformation caused by pressure application is severe. Therefore, the deformed material cannot be substantially restored to the original shape and causes an increase in pressure due to clogging. Therefore, as a method capable of preventing excessive plastic deformation while securing elasticity, the present inventors conceived an idea of disposing a porous material having elasticity between a porous material having stiffness and a filler. As a result of a study based on the idea, the present inventors found that the above configuration exhibits superior durability in the repeated injection test, thereby completing the present invention.

Regarding the elasticity of the first resin filter member 15, the indentation elastic modulus is preferably within a range of 10 MPa or higher and lower than 350 MPa, more preferably within a range of 100 MPa or higher and 250 MPa or lower, and further more preferably within a range of 150 MPa or higher and 250 MPa or lower. Within the above-described range, the first resin filter member 15 exhibits a sufficient elastic deformation function, which is required in the present invention, without being easily plastically deformed.

The indentation elastic modulus of the resin filter member is the average of values obtained by performing the measurement five times in total according to ISO 14577 Parts 1 to 3 under the following conditions.
Measurement device: HM 2000 manufactured by Fischer Instruments K.K.
Measurement indenter: Vickers indenter
Maximum load: 300 mN
Loading rate: 15 mN/sec (reached 300 mN in 20 seconds)
Load holding time: 5 sec
Unloading rate: -15 mN/sec (reached 0 mN in 20 seconds).
Calculating method: A slope (tangent line) of the obtained test force-the indentation curve immediately after unloading was obtained to calculate the indentation elastic modulus.

A specimen of the resin filter member was processed into a shape suitable for use in the column and was provided for the measurement as it was. Regarding the dimension, the diameter was 4.8 mm, and the thickness 0.8 mm to 1.5 mm.

A material of the first resin filter member 15 is not particularly limited as long as it is a resin material satisfying the above-described range of the indentation elastic modulus, and examples thereof include sintered compacts of powders made of soft or hard polyethylene, ultra-high-molecular-weight polyethylene (PE), polypropylene (PP), or polytetrafluoroethylene (PTFE). Among these, a sintered compact of powder made of ultra-high-molecular-weight PE is preferably used because it is effective in reducing a pore size and has a good balance between practical characteristics such as elasticity, mechanical strength, or chemical resistance during handling. Examples of a filter obtained from a sintered compact of powder made of ultra-high-molecular-weight PE include a UHMWPE frit manufactured by IDEX Health & Science LLC, an ultra high density polyethylene sheet manufactured by Sakita, and an inert column filter manufactured by Tomoe Works Co., Ltd.

The pore size of the first resin filter member 15 is preferably within a range of 1 µm or more and 5 µm or less with a filtration accuracy of 95% or higher. Within the above-described range, pressure loss is less likely to occur, and the problem of clogging caused by the penetration of the filler is also less likely to occur. The filtration accuracy is measured using test powder defined in JIS Z8901 with a method including: causing the powder to pass through a filter in a state of being dispersed in IPA; and measuring the amount of particles in the obtained filtrate using a light-scattering method (LS-200, manufactured by Beckman Coulter, Inc.).

The thickness of the first resin filter member 15 is preferably within a range of 0.5 mm or more and 5 mm or less. Within the above-described range, mechanical strength is superior, and pressure loss is less likely to occur.

A diameter φ₁ of the first resin filter member 15 is preferably larger than an inner diameter φ_{ID} of a filler storage unit 11b of the column body 11. A difference between the diameter φ₁ and the inner diameter φ_{ID} is preferably 0.5 mm or more and 5.0 mm or less. Within the above-described range, the handling accuracy required during the disposition of a filter material is appropriate, and the thickness of the column body is economical.

The reason for this is as follows: the first resin filter member 15 having elasticity contacting the filler sufficiently exhibits a function of compensating for the dead volume formed by the filler being changed in the column, which is preferable; and in the configuration where the diameter of the first resin filter member 15 is larger than the inner diameter of the column body, an inner surface of the column body can be covered more reliably as compared with a configuration where the diameter of the first resin filter member 15 is the same as the inner diameter of the column body. In addition, the outer periphery of the first resin filter member 15 may be made of another material which functions as a support.

Regarding the elasticity of the second resin filter member 16, the indentation elastic modulus is preferably within a range of 350 MPa or higher and 2000 MPa or lower, more preferably within a range of 370 MPa or higher and 1000 MPa or lower, and further more preferably within 370 MPa or higher and 550 MPa or lower. Within the above-described range, a function of supporting the filter material having elasticity is sufficient, and a porous body having desired pores can be obtained.

A material of the second resin filter member 16 is not particularly limited as long as it is a resin material satisfying the above-described range of the indentation elastic modulus, and examples thereof include a sintered compact of powder made of polyether ether ketone (PEEK) and a sintered compact of powder made of a mixture of PEEK and polytetrafluoroethylene (PTFE). Examples of a filter obtained from a sintered compact of powder made of PEEK or a sintered compact of powder made of a mixture of PEEK and PTFE include a PEEK frit manufactured by IDEX Health & Science LLC, and an inert column filter manufactured by Tomoe Works Co., Ltd.

The pore size of the second resin filter member 16 is preferably within a range of 1 µm or more and 5 µm or less with a filtration accuracy of 95% or higher. Within the above-described range, pressure loss is less likely to occur. In addition, when the second resin filter member 16 is used in combination with the first resin filter member having elasticity, penetration into pores of the porous material having elasticity caused by a back pressure is suppressed, and sufficient development of elasticity can be secured. As in the first resin filter member, it may be empirically verified that the pore size of the second resin filter member 16 is the same as the average pore size which is obtained by using a measurement method described in ASTM F316-86.

The thickness of the second resin filter member 16 is preferably within a range of 0.5 mm or more and 5 mm or less. Within the above-described range, mechanical strength is superior, and pressure loss is less likely to occur.

As in the first resin filter member 15, a diameter φ₂ of the second resin filter member 16 is preferably larger than the inner diameter φ_{ID} of a filler storage unit 11b of the column body. A difference between the diameter φ₂ and the inner diameter φ_{ID} is preferably 0.5 mm or more and 5.0 mm or less. Within the above-described range, the handling accuracy required during the disposition of a filter material is appropriate, and the thickness of the column body is economical.

The reason for this is as follows: in regard to the second resin filter member 16 having stiffness, similarly, in order to secure a flow path of an eluent and to suppress excessive pressure application to the first resin filter member 15 having elasticity, in the configuration where the diameter of the second resin filter member 16 is larger than the inner diameter of the column body, an inner surface of the column body can be covered more reliably as compared with a configuration where the diameter of the second resin filter member 16 is the same as the inner diameter of the column body. However, the diameters of the first resin filter member 15 and the second resin filter member 16 are not necessarily the same. In addition, the outer periphery of the second resin filter member 16 may be made of another material which functions as a support.

### (Filler)

Basically, the kind of the filler used in the present invention is not particularly limited as long as it is a material used in liquid chromatography. However, it is necessary that the filler is chemically and physically stable and is not decomposed or modified even when dispersed in an eluent.

Examples of a substrate which is a base include resins, silica gel, alumina (aluminum oxide), titania (titanium oxide), ceria (cerium oxide) and carbon. In addition, the composition of the substrate is not limited to a single substance and, for example, may be a complex having a structure (core-shell structure) in which silica gel as a core is coated with a resin. Among these, a crosslinked or non-crosslinked resin material is preferably used because it is chemically stable in a strong acid or a strong alkali and the substrate surface can be chemically modified with various functional groups. In particular, a hydrophilic resin having an alcoholic hydroxyl group is preferably used.

Specific examples of the resin having an alcoholic hydroxyl group include a polyvinyl alcohol resin having an alcoholic hydroxyl group into which an ester group of a crosslinked copolymer containing a carboxylic acid vinyl ester and a crosslinkable monomer is converted by saponification or transesterification. Examples of the carboxylic acid vinyl ester include vinyl acetate, vinyl propionate, vinyl butyrate, vinyl valerate, and vinyl pivalate. Among these, one kind may be used alone, or a combination of two or more kinds may be used. Among these, vinyl acetate and vinyl propionate are preferable because polymerization and saponification are easily performed. As the crosslinkable monomer, crosslinkable monomers having a triazine ring are preferable. Among these crosslinkable monomers, triallyl isocyanurate is particularly preferable.

Examples of the chemical modification of the surface include introduction of a functional group which exhibits a hydrophilic interaction and an ion exchange interaction. Specific examples of the introduction of the functional group include introduction of a hydroxyl group caused by a hydrolytic ring-opening treatment after addition of glycidyl alcohol or epichlorohydrin; addition and introduction of a hydrophilic compound such as polyethylene glycol or cyclodextrin; introduction of an anion exchange group caused by an amine compound; and introduction of a cation exchange group such as a carboxylic acid group, a sulfonic acid group, or a phosphoric acid group.

These fillers are frequently used in ion chromatography in which the filler is preferably a resin material.

Examples of the amine compound used for the introduction of an anion exchange group include tertiary amines such as trimethylamine, triethylamine, tripropylamine, tributylamine, diethylethanolamine, N-ethyldiethanolamine, dimethylbenzoamine, and 1-methylpiperidine; secondary amines such as dimethylamine, diethylamine, methyl ethyl amine, dipropylamine, dibutylamine, N-methyl-D-glucamine, and 3-methylamino-1,2-propanediol; and primary amines such as hexamethylenediamine, pentaethylhexamine, D-glucamine, 1-amino-1-deoxy-D-mannitol, 1-amino-1-deoxy-D-galactitol, 1-amino-1-deoxy-D-iditol, 1-amino-1-deoxy-D-arabinitol, 1-amino-1-deoxy-D-xylitol, 4-amino-1,2,3-butanetriol, and 3-amino-1,2-propanediol. These amines may be directly introduced into a glycidyl group added to the substrate, or may be introduced into the substrate through a compound having a glycidyl group such as epichlorohydrin, 1,4-butanediol diglycidyl ether, ethylene glycol diglycidyl ether, and glycerin diglycidyl ether.

However, the amine compound is not limited to the above-described exemplary materials as long as it has a functional group exhibiting an anion exchange function.

On the other hand, examples of a method of the introduction of a cation exchange group include a method including: coating the substrate with a polymer having a double bond and a carboxylic acid group in the molecules, the polymer being represented by a copolymer of maleic anhydride and butadiene; and heating the polymer and a polymerization initiator to cause a thermal reaction such that the polymer is fixed.

Regarding the particle size of the filler, the average particle size thereof is 1 µm to 30 µm, preferably 2 µm to 20 µm, and more preferably 4 µm to 10 µm. When the particle size is less than 1 µm, an increase in the pressure of the column is great, and it may be extremely difficult to perform filling. On the other hand, when the particle size is more than 30 µm, the pore size of pores between particles increases, an increase in pressure does not occur, and the number of theoretical plates is small. Therefore, it is difficult to obtain the improvement effect according to the present invention.

### (Filling Method)

As a method of filling the filler, a wet method is used. Generally, pressure filling of a slurry using a liquid feeding pump is used. For the pressure filling, for example, a method of fixing the pressure to a certain value, a method of fixing the flow rate to a certain value, or a method of changing the pressure over time or changing the flow rate in a gradient manner is used.

### (Inner Lid Member)

The inner lid member 14 which fixes the first resin filter member 15 and the second resin filter member 16 is required to have a structure for securing the flow path of the eluent and a structure having a function of fixing the filters. In order to secure the flow path of the eluent, a hole is formed in the center of the inner lid member 14. The diameter of the hole only has to be less than the diameter of the filter material. However, when the diameter of the hole is excessively small, the pressure increases. The appropriate diameter of the hole is, for example, 0.3 mm or more.

FIG. 2 shows an example of an eluent outflow end side of a liquid chromatographic column according to an embodiment to which the present invention is applied.

A liquid chromatographic column 20 shown in FIG. 2 includes a column body 21, a filler 22, an outflow-side filter 23, and an inner lid member 24.

Since the column body 21, the filler 22, and the inner lid member 24 are the same as the column body 11, the filler 12, and the inner lid member 14, the description thereof will not be repeated.

### (Outflow-Side Filter)

The outflow-side filter 23 is disposed at an eluent outflow-side end 21a of the column body 21 and is a porous member made of the same material as the second resin filter member 16.

The outflow-side filter is deformed so as to collapse on the same side as a direction in which the eluent flows. Since the filler is pressed in the above direction, the dead volume is less likely to be formed than on the inflow side. On the other hand, the inflow-side filter is pressed by a column inner pressure so as to collapse on the opposite side to the direction in which the eluent flows. Therefore, it is considered that the dead volume is more likely to be formed between the inflow-side filter and the filler.

The elasticity of a resin filter member constituting the outflow-side filter 23 is the same as the elasticity of the above-described second resin filter member 16.

The pore size of the resin filter member constituting the outflow-side filter 23 is the same as the pore size of the above-described second resin filter member 16.

The thickness of the resin filter member constituting the outflow-side filter 23 is the same as the thickness of the above-described second resin filter member 16.

As in the first resin filter member 15 and the second resin filter member 16, a diameter φ₃ of the resin filter member constituting the outflow-side filter 23 is preferably larger than the inner diameter φ_{ID} of a filler storage unit 21b of the column body 21. A difference between the diameter φ₃ and the inner diameter φ_{ID} is preferably 0.5 mm or more and 5.0 mm or less. Within the above-described range, the handling accuracy required during the disposition of a filter material is appropriate, and the thickness of the column body is economical.

The reason for this is as follows: the resin filter member constituting the outflow-side filter 23 which contacts the filler sufficiently exhibits a function of compensating for the dead volume which is formed by the filler being changed in the column, which is preferable; and in the configuration where the diameter of the outflow-side filter 23 is larger than the inner diameter of the column body, an inner surface of the column body can be covered more reliably as compared with a configuration where the diameter of the outflow-side filter 23 is the same as the inner diameter of the column body. In addition, the outer periphery of the outflow-side filter 23 may be made of another material which functions as a support.

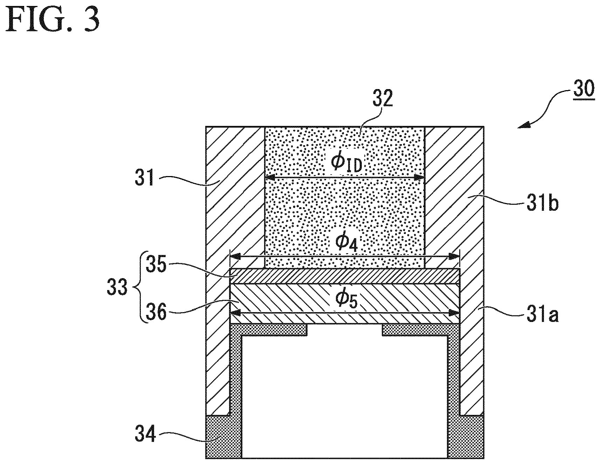

FIG. 3 shows an example of an eluent outflow end side of a liquid chromatographic column according to another embodiment to which the present invention is applied.

A liquid chromatographic column 30 shown in FIG. 3 includes a column body 31, a filler 32, an outflow-side filter 33, and an inner lid member 34.

Since the column body 31, the filler 32, and the inner lid member 34 are the same as the column body 11, the filler 12, and the inner lid member 14, the description thereof will not be repeated.

### (Outflow-Side Filter)

The outflow-side filter 33 is different from the outflow-side filter 23 shown in FIG. 2, in that the outflow-side filter 33 is disposed at an eluent outflow-side end 31a of the column body 31; and as in the inflow-side filter 13, the outflow-side filter 33 has a two-layer structure including a resin filter member 35 made of the same material as the first resin filter member and a resin filter member 36 made of the same material as the second resin filter member which are disposed in this order from a side of the outflow-side filter 33 contacting the filler 32.

As in the first resin filter member 15 and the second resin filter member 16, a diameter φ₄ of the resin filter member 35 and a diameter φ₅ of the resin filter member 36 constituting the outflow-side filter 23 are preferably larger than the inner diameter φ_{ID} of a filler storage unit 31b of the column body 31. A difference between each of the diameters φ₄, φ₅ and the inner diameter φ_{ID} is preferably 0.5 mm or more and 5.0 mm or less. Within the above-described range, the handling accuracy required during the disposition of a filter material is appropriate, and the thickness of the column body is economical.

The elasticity, pore size, thickness, and diameter of each of the filter member 35 made of the same material as the first resin filter member and the filter member 36 made of the same material as the second resin filter member may have the same values as those of each of the first resin filter member 15 and the second resin filter member 16.

The inflow-side filter and the outflow-side filter used in the liquid chromatographic column according to the present invention are pressed by a inner lid component having a hole through which the eluent passes, and are fixed by fastening an end cap.

A liquid chromatographic apparatus according to the present invention has the same configuration as a well-known liquid chromatographic apparatus of the related art, that is, includes a pump, an injector, a detector, and a data processor except that it includes the liquid chromatographic column according to the present invention.

By using the liquid chromatographic column and the liquid chromatographic apparatus including the liquid chromatographic column according to the present invention, liquid chromatography analysis results can be continuously supplied over a long period of time. For example, effects contributing to the stable operation of drinking water facilities and power generation facilities can be obtained from water quality monitoring of the facilities.

### EXAMPLE

Hereinafter, the effects of the present invention will be clarified in detail using Examples.

### [Example 1]

### (1) Preparation of filler 1

### (Synthesis of Polyvinyl Alcohol Gel (Substrate))

100 g of vinyl acetate, 150 g of triallyl isocyanurate, 100 g of butyl acetate, 25 g of n-decane, and 5 g of 2,2-azobisisobutyronitrile were mixed with each other to obtain a homogeneous mixture. The obtained mixture and a solution in which 12 g of polyvinyl alcohol and 18 g of disodium hydrogenphosphate were dissolved in 1200 mL of water were put into a 5-L three-necked flask including a reflux condenser and were stirred for 10 minutes. Next, the obtained solution was polymerized at 60°C for 16 hours while being stirred in a nitrogen gas stream to obtain a particulate polymer. This polymer was filtered, washed, extracted with acetone, and dried. Next, this polymer and 3 L of sodium hydroxide were put into a 5L three-necked flask including a reflux condenser, a nitrogen introduction pipe, and a stirrer and were stirred in a nitrogen gas stream at 15°C for 20 hours. The polymer underwent saponification and was filtered, washed, and dried. The concentration of hydroxyl groups in the polyvinyl alcohol polymer obtained by saponification was 2.1 meq/g.

### (Surface Modification Treatment of Substrate)

10 g of the obtained dry polyvinyl alcohol polymer, 45 g of epichlorohydrin, 100 mL of dimethyl sulfoxide, and 5 mL of 30% sodium hydroxide aqueous solution were put into a separable flask and were stirred at 30°C for 20 hours such that a group having a glycidyl group was introduced into the polymer. The introduced polymer was washed with dimethyl sulfoxide, water, and methanol and was dried.

4 g of the polymer into which the glycidyl group was introduced, 10 g of triethylamine, and 40 mL of water were put into a separable flask and were stirred at 30°C for 20 hours. As a result, filler 1 into which an amino group was introduced was prepared. This filler 1 was washed with 0.5 N hydrochloric acid and 0.5 N sodium hydroxide aqueous solution while washing with water between the washing processes, was further washed with methanol, and was dried.

### (2) Preparation of Column Filled with filler 1

The prepared filler 1 was dispersed in water to prepare a slurry. Using a liquid feeding pump, a column body made of PEEK having an inner diameter of 2.0 mm and a length of 150 mm was filled with the slurry. On the eluent inflow side of the column, in order from a side contacting filler 1, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed as the second resin filter member. In addition, on the outflow side, a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 5.0 mm, and a thickness of 1.5 mm, which was the same as in the second resin filter member on the inflow side, was disposed as a resin filter member. The filters were fixed by inserting an inner lid component into each of the inflow side and the outflow side and fastening an end cap.

### (3) Evaluation of Characteristics of Column Filled with filler 1 (Repeated Injection Test Method and Durability Evaluation)

Using this column, 3.2 mM sodium carbonate (Na₂CO₃)/1.0 mM sodium bicarbonate (NaHCO₃) as an eluent was caused to flow at a column temperature of 25°C and at a flow rate of 0.21 mL/min, and an analysis sample was repeatedly injected 1500 times. As the analysis sample, an aqueous solution containing 1 ppm of F⁻, 2 ppm of Cl⁻, 3 ppm of NO₂⁻, 3 ppm of Br⁻, 5 ppm of NO₃⁻, 10 ppm of PO₄³⁻, and 10 ppm of SO₄²⁻ was used, and this analysis sample was repeatedly injected. As test equipment, Compact IC-882 (manufactured by Metrohm; using electrical conductivity detector and suppressor) was used.

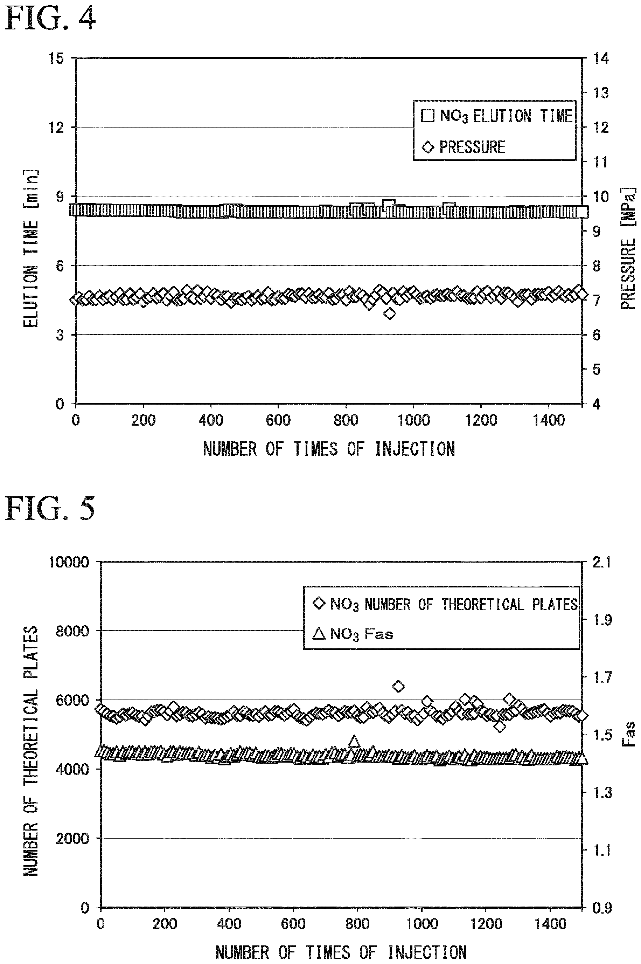

The column pressure and the number of theoretical plates, elution time, and peak symmetry coefficient (Fas) of NO₃⁻ were measured after every 10 times of injection, and the transitions thereof were recorded. FIG. 4 is a graph showing the transitions of the column pressure and the elution time. FIG. 5 is a graph showing the transitions of the number of theoretical plates and the peak symmetry coefficient (Fas) of NO₃⁻. Table 1 shows the values of the respective items before the repeated injection test and the values thereof after 1500 times of the repeated injection test.

The column pressure was measured using a pressure sensor of the liquid feeding pump disposed on an inlet side.

**[Table 1]**

| | Before Repeated Injection Test | | | | After Repeated Injection Test | | | |
|---|---|---|---|---|---|---|---|---|
| | Pressure (MPa) | NO₃⁻ Elution Time (min) | NO₃⁻ Number of Theoretical Plates | NO₃⁻ Peak Symmetry Fas | Pressure (MPa) | NO₃⁻ Elution Time (min) | NO₃⁻ Number of Theoretical Plates | NO₃⁻ Peak Symmetry Fas |
| Example 1 | 7.0 | 8.43 | 5710 | 1.44 | 7.2 | 8.33 | 5545 | 1.42 |
| Example 2 | 6.3 | 8.55 | 5400 | 1.27 | 7.1 | 8.29 | 4910 | 1.26 |
| Example 3 | 7.3 | 8.57 | 5720 | 1.30 | 7.6 | 8.52 | 5400 | 1.30 |
| Example 4 | 6.6 | 8.52 | 5360 | 1.40 | 6.9 | 8.31 | 4950 | 1.37 |
| Comparative Example 1 | 7.1 | 8.27 | 6050 | 1.51 | 16.8 | 7.94 | 4050 | 1.37 |
| Comparative Example 2 | 7.1 | 8.32 | 5850 | 1.49 | Test Stopped because Pressure Exceeded 20 MPa at 400 Times of Injection | | | |

The peak symmetry coefficient (Fas) is a value representing the symmetry of a peak shape in a chromatogram, and was obtained from "Fas=(Full Peak Width Measured at Position of 5% Peak Height)/2×(Half Peak Width Measured at Position of 5% Peak Height) (United States Pharmacopeia)".

In addition, the number of theoretical plates was calculated using a so-called tangent line method (United States Pharmacopeia) from "Number Of Theoretical Plates=16×(Total Elution Time of Peak/Peak Width of Baseline Tangent Line)^2".

It can be seen from FIGS. 4 and 5 that, while the repeated injection test was performed 1500 times, the column pressure and the number of theoretical plates, elution time, and peak symmetry coefficient (Fas) of NO₃⁻ were significantly stable; and stable separation performance was exhibited even during continuous use over a long period of time.

### [Example 2]

Filler 1 was dispersed in water to prepare a slurry. Using a liquid feeding pump, a column body made of PEEK having an inner diameter of 2.0 mm and a length of 150 mm was filled with the slurry. A column was prepared using the same method as in Example 1, except that, on the eluent inflow side of the column, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 490MPa, manufactured by Tomoe Works Co., Ltd.) obtained from a sintered compact made of PEEK (PEEK 100%) having a pore size of 2.0 µm, a diameter of 4.8 mm, and a thickness of 1.5 mm was disposed as the second resin filter member.

Using this column, the same repeated injection test as in Example 1 was performed. Table 1 shows the values of the respective items before and after the test.

### [Example 3]

Filler 1 was dispersed in water to prepare a slurry. Using a liquid feeding pump, a column body made of PEEK having an inner diameter of 2.0 mm and a length of 150 mm was filled with the slurry. On the eluent inflow side of the column, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed as the second resin filter member. In addition, on the eluent outflow side of the column, in order from a side contacting the filler, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm, which was the same as in the first resin filter member on the eluent inflow side, was disposed as a resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm, which was the same as in the second resin filter member on the inflow side, was disposed as a resin filter member. Using the same method as Example 1 except for the above-described conditions, a column was prepared.

Using this column, the same repeated injection test as in Example 1 was performed. Table 1 shows the values of the respective items before and after the test.

### [Example 4]

Filler 1 was dispersed in water to prepare a slurry. Using a liquid feeding pump, a column body made of PEEK having an inner diameter of 2.0 mm and a length of 150 mm was filled with the slurry. On the eluent inflow side of the column, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 490MPa, manufactured by Tomoe Works Co., Ltd.) obtained from a sintered compact made of PEEK (PEEK 100%) having a pore size of 2.0 µm, a diameter of 4.8 mm, and a thickness of 1.5 mm was disposed as the second resin filter member. In addition, on the eluent outflow side of the column, in order from a side contacting the filler, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm, which was the same as in the first resin filter member on the eluent inflow side, was disposed as a resin filter member; and then a filter (indentation elastic modulus: 490MPa, manufactured by Tomoe Works Co., Ltd.) obtained from a sintered compact made of PEEK (PEEK 100%) having a pore size of 2.0 µm, a diameter of 4.8 mm, and a thickness of 1.5 mm, which was the same as in the second resin filter member on the inflow side, was disposed as a resin filter member. The filters were fixed by inserting an inner lid component into each of the inflow side and the outflow side and fastening an end cap.

Using this column, the same repeated injection test as in Example 1 was performed. Table 1 shows the values of the respective items before and after the test.

### [Comparative Example 1]

Filler 1 was dispersed in water to prepare a slurry. Using a liquid feeding pump, a column body made of PEEK having an inner diameter of 2.0 mm and a length of 150 mm was filled with the slurry. A column was prepared using the same method as in Example 1 except that, on the eluent inflow side of the column, only a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed.

Using this column, the same repeated injection test as in Example 1 was performed. Table 1 shows the values of the respective items before and after the test.

### [Comparative Example 2]

Filler 1 was dispersed in water to prepare a slurry. Using a liquid feeding pump, a column body made of PEEK having an inner diameter of 2.0 mm and a length of 150 mm was filled with the slurry. A column was prepared using the same method as in Example 1 except that, on the eluent inflow side of the column, two filters (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm were disposed to overlap each other.

Using this column, the same repeated injection test as in Example 1 was performed. Table 1 shows the values of the respective items before and after the test.

When the results of Examples 1 to 4 and the results of Comparative Examples 1 and 2 in Table 1 before and after the repeated injection test were compared to each other, there were significant differences in the increase in pressure and the deterioration of the number of theoretical plates therebetween.

That is, regarding the increase in the pressure, the following results were obtained. In Examples 1 to 4, the difference between the values before and after the test was about 3% to 13%. On the other hand, in Comparative Example 1, the pressure increased to be two times or more the value before the test; and in Comparative Example 2, the pressure exceeded 20 MPa, and in order to avoid overload on the apparatus, the test was stopped at 400 times of injection, and thus the result was not able to be obtained.

In addition, regarding the deterioration of the number of theoretical plates, the following results were obtained. In Examples 1 to 4, the difference between the values before and after the test was about 3% to 9%. On the other hand, in Comparative Example 1, the difference between the values before and after the test exceeded 30%; and in Comparative Example 2, the pressure exceeded 20 MPa, and in order to avoid overload on the apparatus, the test was stopped at 400 times of injection, and thus the result was not able to be obtained.

### [Example 5]

### (1) Preparation of filler 2

10 g of the dry polyvinyl alcohol polymer described in Example 1, 100 mL of dimethyl sulfoxide, and 5 mL of 30% sodium hydroxide aqueous solution were put into a separable flask and were stirred at 30°C for 20 hours such that a group having a glycidyl group was introduced into the polymer. The introduced polymer was washed with dimethyl sulfoxide, water, and methanol and was dried.

4 g of the polymer into which the glycidyl group was introduced, 10 g of methylpiperidine, and 40 mL of water were put into a separable flask and were stirred at 30°C for 20 hours. As a result, filler B into which an amino group was introduced was prepared. This filler was washed with 0.5 N hydrochloric acid and 0.5 N sodium hydroxide aqueous solution while washing with water between the washing processes, was further washed with methanol, and was dried.

### (2) Preparation of Column Filled with filler 2

Filler 2 was dispersed in water to prepare a slurry. Using a liquid feeding pump, a column body made of PEEK having an inner diameter of 2.0 mm and a length of 250 mm was filled with the slurry. On the eluent inflow side of the column, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed as the second resin filter member. In addition, on the outflow side, a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm, which was the same as in the second resin filter member on the inflow side, was disposed as a resin filter member. The filters were fixed by inserting an inner lid component into each of the inflow side and the outflow side and fastening an end cap.

### (3) Evaluation of Characteristics of Column Filled with filler 2 (Repeated Injection Test Method and Durability Evaluation)

Using this column, 3.6 mM sodium carbonate (Na₂CO₃) as an eluent was caused to flow at a column temperature of 45°C and at a flow rate of 0.20 mL/min, and an analysis sample was repeatedly injected 1500 times. As the analysis sample, an aqueous solution containing 5 ppm of F⁻, 10 ppm of ClO₂⁻, 5 ppm of BrO₃⁻, 10 ppm of Cl⁻, 5 ppm of NO₂⁻, 1 ppm of Br⁻, 1 ppm of ClO₃⁻, 1 ppm of dichloroacetate ion, 10 ppm of NO₃⁻, 5 ppm of PO₄³⁻, and 10 ppm of SO₄²⁻ was used, and this analysis sample was repeatedly injected. As test equipment, Compact IC-882 (manufactured by Metrohm; using electrical conductivity detector and suppressor) was used.

The column pressure and the elution time, number of theoretical plates, and peak symmetry coefficient (Fas) of SO₄²⁻ were measured after every 10 times of injection, and the transitions thereof were recorded. Table 1 shows the values of the respective items before the repeated injection test and the values thereof after 1500 times of the repeated injection test.

### [Example 6]

Filler 2 was dispersed in water to prepare a slurry. Using a liquid feeding pump, a column body made of PEEK having an inner diameter of 2.0 mm and a length of 250 mm was filled with the slurry. On the eluent inflow side of the column, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm was disposed as the first resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed as the second resin filter member. In addition, on the eluent outflow side of the column, in order from a side contacting the filler, a filter (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm, which was the same as in the first resin filter member on the eluent inflow side, was disposed as a resin filter member; and then a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm, which was the same as in the second resin filter member on the inflow side, was disposed as a resin filter member. Using the same method as Example 5 except for the above-described conditions, a column was prepared.

Using this column, the same repeated injection test as in Example 5 was performed. Table 2 shows the values of the respective items before and after the test.

**[Table 2]**

| | Before Repeated Injection Test | | | | After Repeated Injection Test | | | |
|---|---|---|---|---|---|---|---|---|
| | Pressure (MPa) | SO₄⁻ Elution Time (min) | SO₄⁻ Number of Theoretical Plates | SO₄⁻ Peak Symmetry Fas | Pressure (MPa) | SO₄⁻ Elution Time (min) | SO₄⁻ Number of Theoretical Plates | SO₄⁻ Peak Symmetry Fas |
| Example 5 | 8.2 | 30.88 | 18840 | 1.12 | 9.2 | 30.76 | 17700 | 1.10 |
| Example 6 | 8.6 | 28.71 | 17900 | 1.15 | 9.7 | 28.62 | 17000 | 1.12 |
| Comparative Example 3 | 10.0 | 29.38 | 18230 | 1.11 | 18.9 | 29.05 | 12220 | 1.11 |
| Comparative Example 4 | 11.2 | 30.22 | 18580 | 1.10 | Test Stopped because Pressure Exceeded 20 MPa at 320 Times of Injection | | | |

### [Comparative Example 3]

Filler 2 was dispersed in water to prepare a slurry. Using a liquid feeding pump, a column body made of PEEK having an inner diameter of 2.0 mm and a length of 250 mm was filled with the slurry. A column was prepared using the same method as in Example 5 except that, on the eluent inflow side of the column, only a filter (indentation elastic modulus: 400MPa, manufactured by Tomoe Works Co., Ltd.) obtained from a sintered compact made of PEEK/PTFE (weight ratio: 50/50) having a pore size of 5.0 µm, a diameter of 4.8 mm, and a thickness of 1.5 mm was disposed.

Using this column, the same repeated injection test as in Example 5 was performed. Table 2 shows the values of the respective items before and after the test.

### [Comparative Example 4]

Filler 2 was dispersed in water to prepare a slurry. Using a liquid feeding pump, a column body made of PEEK having an inner diameter of 2.0 mm and a length of 250 mm was filled with the slurry. A column was prepared using the same method as in Example 5 except that, on the eluent inflow side of the column, two filters (indentation elastic modulus: 210MPa, manufactured by IDEX Health & Science LLC) obtained from a sintered compact made of ultra-high-molecular-weight PE having a pore size of 2.0 µm, a diameter of 5.0 mm, and a thickness of 0.8 mm were disposed to overlap each other.

Using this column, the same repeated injection test as in Example 5 was performed. Table 2 shows the values of the respective items before and after the test.

When the results of Examples 5 and 6 and the results of Comparative Examples 3 and 4 in Table 2 before and after the repeated injection test were compared to each other, there were significant differences in the increase in pressure and the deterioration of the number of theoretical plates therebetween.

That is, regarding the increase in the pressure, the following results were obtained. In Examples 5 and 6, the difference between the values before and after the test was about 12% to 13%. On the other hand, in Comparative Example 3, the pressure increased to be about two times the value before the test; and in Comparative Example 4, the pressure exceeded 20 MPa, and in order to avoid overload on the apparatus, the test was stopped at 320 times of injection, and thus the result was not able to be obtained.

In addition, regarding the deterioration of the number of theoretical plates, the following results were obtained. In Examples 5 and 6, the difference between the values before and after the test was about 5% to 6%. On the other hand, in Comparative Example 3, the difference between the values before and after the test was about 30%; and in Comparative Example 4, the pressure exceeded 20 MPa, and in order to avoid overload on the apparatus, the test was stopped at 320 times of injection, and thus the result was not able to be obtained.

### INDUSTRIAL APPLICABILITY

By using the liquid chromatographic column and the liquid chromatographic apparatus including the liquid chromatographic column according to the present invention, liquid chromatography, which is widely used as an analysis method in various fields, can be continuously used stably over a long period of time. In particular, continuous analysis can be performed even when performed under conditions where the pressure applied to a column is increased in order to increase the flow rate of an eluent for reduction in analysis time or to allow reduction of the diameter and length of the column for reduction in the consumption of the eluent. The liquid chromatographic column and the liquid chromatographic apparatus including the liquid chromatographic column according to the present invention may be efficiently used in fields where water quality is required to be continuously monitored, for example, for drinking water preparation, semiconductor manufacturing, or steam generation in a power plant.

### REFERENCE SIGNS LIST

10: LIQUID CHROMATOGRAPHIC COLUMN (INFLOW SIDE)
11, 21, 31: COLUMN BODY
11a: ELUENT INFLOW-SIDE END
11b, 21b, 31b: FILLER STORAGE UNIT
12, 22, 32: FILLER
13: INFLOW-SIDE FILTER
14, 24, 34: INNER LID MEMBER
15: FIRST RESIN FILTER MEMBER
16: SECOND RESIN FILTER MEMBER
20: LIQUID CHROMATOGRAPHIC COLUMN (OUTFLOW SIDE)
21a, 31a: ELUENT OUTFLOW-SIDE END
23, 33: OUTFLOW-SIDE FILTER
30: LIQUID CHROMATOGRAPHIC COLUMN (OUTFLOW SIDE)
33: OUTFLOW-SIDE FILTER

## Claims

1. A liquid chromatographic column (10), comprising:
a cylindrical column body (11,21,31);
an inflow-side filter (13) that is disposed at an eluent inflow-side end (11a) of the column body (11, 21, 31);
an outflow-side filter (23, 33) that is disposed at an eluent outflow-side end (21a, 31a) of the column body (11, 21, 31); and
a filler (12, 22, 32) that is filled between the inflow-side filter (13) and the outflow-side filter (23, 33),
wherein the inflow-side filter (13) has a two-layer structure consisting of a first resin filter member (15) and a second resin filter member (16) which are disposed in this order from a side of the filler,
the first resin filter member (15) has an indentation elastic modulus lower than that of the second resin filter member (16), and
diameters of the inflow-side filter (13) and the outflow-side filter (23, 33) are larger than an inner diameter of a filler storage unit (11b, 21b, 31b) of the column body (11, 21, 31).

2. The liquid chromatographic column according to claim 1, wherein:
the first resin filter member (15) is made of polyethylene, polypropylene, or polytetrafluoroethylene, and
the second resin filter member (16) is made of polyether ether ketone or a mixture of polyether ether ketone and polytetrafluoroethylene.

3. The liquid chromatographic column according to Claim 1 or 2,
wherein the indentation elastic modulus of the first resin filter member (15) is 10 MPa or higher and lower than 350 MPa, and
the indentation elastic modulus of the second resin filter member (16) is 350 MPa or higher and 2000 MPa or lower.

4. The liquid chromatographic column according to any one of Claims 1 to 3,
wherein at least one of the first resin filter member (15) and the second resin filter member (16) is made of a sintered compact of resin powder.

5. The liquid chromatographic column according to any one of Claims 1 to 4,
wherein the first resin filter member (15) is made of polyethylene, polypropylene, or polytetrafluoroethylene.

6. The liquid chromatographic column according to any one of Claims 1 to 5,
wherein the second resin filter member (16) is made of polyether ether ketone or a mixture of polyether ether ketone and polytetrafluoroethylene.

7. The liquid chromatographic column according to any one of Claims 1 to 6,
wherein the outflow-side filter (23, 33) is made of the same material as the second resin filter member (16), or has a two-layer structure consisting of a filter member (35) made of the same material as the first resin filter member (15) and a filter member (36) made of the same material as the second resin filter member (16) which are disposed in this order from a side of the filler.

8. The liquid chromatographic column according to any one of claims 1 to 7,
wherein a difference between the diameters of the inflow-side filter (13) and the outflow-side filter (23, 33) and the inner diameter of the filler storage unit (11b, 21b, 31b) of the column body (11, 21, 31) is 0.5 mm or more and 5.0 mm or less.

9. The liquid chromatographic column according to any one of claims 1 to 8,
wherein the filler has a functional group which exhibits an ion exchange interaction.

10. Use of the liquid chromatographic column (10) according to claim 1 or 2 for ion exchange chromatography, wherein a filler (20) in which a functional group which exhibits an ion exchange interaction is introduced in the liquid chromatographic column (10).

11. A liquid chromatographic apparatus comprising
the liquid chromatographic column (10) according to any one of Claims 1 to 9.

## Patentansprüche

1. Flüssigchromatographiesäule (10), mit:
einem zylindrischen Säulenkörper (11, 21, 31);
einem Eintritt-seitigen Filter (13), der an einem Elutionsmitteleintrittseitigen Ende (11a) des Säulenkörpers (11, 21, 31) angeordnet ist;
einem Austritt-seitigen Filter (23, 33), der an einem Elutionsmittelaustrittseitigen Ende (21a, 31a) des Säulenkörpers (11, 21, 31) angeordnet ist; und
einem Füllmaterial (12, 22, 32), das zwischen dem Eintritt-seitigen Filter (13) und dem Austritt-seitigen Filter (23, 33) eingefüllt ist,
wobei der Eintritt-seitige Filter (13) eine zweischichtige Struktur aufweist, die aus einem ersten Harzfilterelement (15) und einem zweiten Harzfilterelement (16) besteht, die in dieser Reihenfolge von einer Seite des Füllmaterials aus angeordnet sind,
das erste Harzfilterelement (15) einen niedrigeren Eindring-Elastizitätsmodul als das zweite Harzfilterelement (16) aufweist, und
die Durchmesser des Eintritt-seitigen Filters (13) und des Austritt-seitigen Filters (23, 33) größer als der Innendurchmesser einer Füllmaterialvorratseinheit (11b, 21b, 31b) des Säulenkörpers (11, 21, 31) sind.

2. Flüssigchromatographiesäule nach Anspruch 1, wobei:
das erste Harzfilterelement (15) aus Polyethylen, Polypropylen oder Polytetrafluorethylen gebildet ist, und
das zweite Harzfilterelement (16) aus Polyetheretherketon oder einem Gemisch aus Polyetheretherketon und Polytetrafluorethylen gebildet ist.

3. Flüssigchromatographiesäule nach Anspruch 1 oder 2,
wobei der Eindring-Elastizitätsmodul des ersten Harzfilterelements (15) 10 MPa oder höher und niedriger als 350 MPa ist, und
der Eindring-Elastizitätsmodul des zweiten Harzfilterelements (16) 350 MPa oder mehr und 2000 MPa oder weniger ist.

4. Flüssigchromatographiesäule nach einem der Ansprüche 1 bis 3,
wobei mindestens eines des ersten Harzfilterelements (15) und des zweiten Harzfilterelements (16) aus einem Sinterpressling aus Harzpulver gebildet ist.

5. Flüssigchromatographiesäule nach einem der Ansprüche 1 bis 4,
wobei das erste Harzfilterelement (15) aus Polyethylen, Polypropylen oder Polytetrafluorethylen gebildet ist.

6. Flüssigchromatographiesäule nach einem der Ansprüche 1 bis 5,
wobei das zweite Harzfilterelement (16) aus Polyetheretherketon oder einer Mischung aus Polyetheretherketon und Polytetrafluorethylen gebildet ist.

7. Flüssigchromatographiesäule nach einem der Ansprüche 1 bis 6,
wobei der Austritt-seitige Filter (23, 33) aus dem gleichen Material wie das zweite Harzfilterelement (16) gebildet ist oder eine zweischichtige Struktur aufweist, die aus einem Filterelement (35) besteht, welches aus dem gleichen Material wie das erste Harzfilterelement (15) gebildet ist, und einem Filterelement (36), welches aus dem gleichen Material wie das zweite Harzfilterelement (16) gebildet ist, die in dieser Reihenfolge von einer Seite des Füllmaterials aus angeordnet sind.

8. Flüssigchromatographiesäule nach einem der Ansprüche 1 bis 7,
wobei die Differenz zwischen den Durchmessern des Eintritt-seitigen Filters (13) und des Austritt-seitigen Filters (23, 33) und dem Innendurchmesser der Füllmaterialvorratseinheit (11b, 21b, 31b) des Säulenkörpers (11, 21, 31) 0,5 mm oder mehr und 5,0 mm oder weniger ist.

9. Flüssigchromatographiesäule nach einem der Ansprüche 1 bis 8,
wobei der Füllstoff eine funktionelle Gruppe aufweist, die eine lonenaustauschwechselwirkung zeigt.

10. Verwendung der Flüssigchromatographiesäule (10) nach Anspruch 1 oder 2 für die lonenaustauschchromatographie, wobei ein Füllmaterial (20), in welches eine funktionelle Gruppe, die eine lonenaustauschwechselwirkung zeigt, in die Flüssigchromatographiesäule (10) eingeführt ist/wird.

11. Flüssigchromatographie-Vorrichtung, welche
die Flüssigchromatographiesäule (10) nach einem der Ansprüche 1 bis 9 aufweist.

## Revendications

1. Colonne de chromatographie en phase liquide (10), comprenant :
un corps (11, 21, 31) de colonne cylindrique ;
un filtre (13) côté entrée qui est disposé au niveau d'une extrémité (11a) côté entrée d'éluant du corps (11, 21, 31) de colonne ;
un filtre (23, 33) côté sortie qui est disposé au niveau d'une extrémité (21a, 31a) côté sortie d'éluant du corps (11, 21, 31) de colonne ; et
une charge (12, 22, 32) qui est chargée entre le filtre (13) côté entrée et le filtre (23, 33) côté sortie,
dans laquelle le filtre (13) côté entrée a une structure bicouche constituée d'un premier élément filtrant (15) en résine et d'un second élément filtrant (16) en résine qui sont disposés dans cet ordre à partir d'un côté de la charge,
le premier élément filtrant (15) en résine a un module élastique d'indentation inférieur à celui du second élément filtrant (16) en résine, et
les diamètres du filtre (13) côté entrée et du filtre (23, 33) côté sortie sont supérieurs à un diamètre interne d'une unité de stockage de charge (11b, 21b, 31b) du corps (11, 21, 31) de colonne.

2. Colonne de chromatographie en phase liquide selon la revendication 1, dans laquelle :
le premier élément filtrant (15) en résine est fait de polyéthylène, de polypropylène ou de polytétrafluoroéthylène, et
le second élément filtrant (16) en résine est fait de polyéther éther cétone ou d'un mélange de polyéther éther cétone et de polytétrafluoroéthylène.

3. Colonne de chromatographie en phase liquide selon la revendication 1 ou 2,
dans laquelle le module élastique d'indentation du premier élément filtrant (15) en résine est de 10 MPa ou plus et de moins de 350 MPa, et
le module élastique d'indentation du second élément filtrant (16) en résine est de 350 MPa ou plus et de 2 000 MPa ou moins.

4. Colonne de chromatographie en phase liquide selon l'une quelconque des revendications 1 à 3,
dans laquelle au moins l'un du premier élément filtrant (15) en résine et du second élément filtrant (16) en résine est fait d'une pièce frittée de poudre de résine.

5. Colonne de chromatographie en phase liquide selon l'une quelconque des revendications 1 à 4,
dans laquelle le premier élément filtrant (15) en résine est fait de polyéthylène, de polypropylène ou de polytétrafluoroéthylène.

6. Colonne de chromatographie en phase liquide selon l'une quelconque des revendications 1 à 5,
dans laquelle le second élément filtrant (16) en résine est fait de polyéther éther cétone ou d'un mélange de polyéther éther cétone et de polytétrafluoroéthylène.

7. Colonne de chromatographie en phase liquide selon l'une quelconque des revendications 1 à 6,
dans laquelle le filtre (23, 33) côté sortie est fait du même matériau que le second élément filtrant (16) en résine, ou a une structure bicouche constituée d'un élément filtrant (35) fait du même matériau que le premier élément filtrant (15) en résine et d'un élément filtrant (36) fait du même matériau que le second élément filtrant (16) en résine qui sont disposés dans cet ordre à partir d'un côté de la charge.

8. Colonne de chromatographie en phase liquide selon l'une quelconque des revendications 1 à 7,
dans laquelle une différence entre les diamètres du filtre (13) côté entrée et du filtre (23, 33) côté sortie et le diamètre interne de l'unité de stockage de charge (11b, 21b, 31b) du corps (11, 21, 31) de colonne est de 0,5 mm ou plus et de 5,0 mm ou moins.

9. Colonne de chromatographie en phase liquide selon l'une quelconque des revendications 1 à 8,
dans laquelle la charge a un groupe fonctionnel qui présente une interaction par échange d'ions.

10. Utilisation de la colonne de chromatographie en phase liquide (10) selon la revendication 1 ou 2 pour une chromatographie par échanges d'ions, dans laquelle une charge (20) dans laquelle un groupe fonctionnel qui présente une interaction d'échange d'ions est introduite dans la colonne de chromatographie en phase liquide (10).

11. Appareil de chromatographie en phase liquide comprenant la colonne de chromatographie en phase liquide (10) selon l'une quelconque des revendications 1 à 9.
